# EUROPÄISCHE PATENTSCHRIFT

(11) **EP 0 617 761 B1**
(45) Veröffentlichungstag und Bekanntmachung des Hinweises auf die Patenterteilung: **08.04.1998**
(21) Anmeldenummer: 93920639.7
(22) Anmeldetag: 01.10.1993
(51) Int. Cl.: F16B 12/14

(54) **METALLISCHES BAUELEMENT ZUM VERBINDEN VON WERKSTÜCKEN AUS HOLZ, HOLZWERKSTOFF ODER KUNSTSTOFF**
METAL COMPONENT FOR JOINING TIMBER, DERIVED TIMBER PRODUCT OR PLASTIC WORKPIECES
ELEMENT DE CONSTRUCTION METALLIQUE POUR L'ASSEMBLAGE DE PIECES EN BOIS, EN DERIVES DU BOIS OU EN MATIERE PLASTIQUE

(30) Priorität: 08.10.1992 CH 3148/92
(43) Veröffentlichungstag der Anmeldung: 05.10.1994
(73) Patentinhaber: BISCHOF, Albrecht, CH-8634 Hombrechtikon (CH)
(72) Erfinder: BISCHOF, Albrecht, CH-8634 Hombrechtikon (CH)
(74) Vertreter: von Puttkamer, Nikolaus, Dipl.-Ing. Patentanwälte Haft, von Puttkamer Berngruber, Czybulka
(86) Internationale Anmeldenummer: CH9300235
(87) Internationale Veröffentlichungsnummer: WO9409280

(56) Entgegenhaltungen:
- FR-A- 1 491 842
- FR-A- 2 191 638
- FR-E- 84 235
- US-A- 4 261 665

## Beschreibung

Die Erfindung betrifft ein metallisches Bauelement zum Verbinden von einem ersten Werkstück mit einem zweiten Werkstück nach dem Oberbegriff des Patentanspruches 1.

Im speziellen Sinne bezieht sich die Erfindung auf ein metallisches Bauelement zum Verbinden von Werkstücken aus Holz, Holzwerkstoff wie Spanplatte, Schichtstoffplatte oder Kunststoff, basierend auf dem Nut/Feder-Prinzip.

In der Innenarchitektur und der Schreinerei, speziell der Möbelschreinerei und des Innenausstattung, sowie des privaten Freizeit- und Liebhabereibetätigung sind Bauelemente nach einer Vielzahl von Verbindungstechniken zum Zusammenbau von mehreren Werkstücken bekannt. Meist handelt es sich darum, mehr oder weniger ebene Flächen von benachbarten Einzelteilen zu einem Ganzen zu fügen. Solche Verbindungen können lösbar oder nicht lösbar gestaltet werden. Unter die letzteren fallen vor allem Leimverbindungen. Die Grundformen stellen am häufigsten stumpf oder im rechten Winkel aneinander stossende ebene Flächen dar.

Eine bekannte Art der Verbindung beruht auf dem Nut/Feder-Prinzip. Die zu verbindenden Werkstücke erhalten je eine durchgehende Nut oder einzelne unterbrochene schmale Schlitze, in die ein Zwischenstück, die sogenannte "Feder" eingelegt wird. Im Prinzip stellt dies eine Keilverbindung dar, wie sie auch aus dem Maschinenbau bekannt ist. Um eine gute kraftschlüssige Verbindung herzustellen, ist es in der Regel notwendig, die Feder mit den zu verbindenden Werkstücken in der Nut zu verleimen. Eine andere Verbindungsart besteht im sogenannten Hefteisen, einer flachen mit Löchern versehenen Lasche, die an einem Ende in einen Gewindebolzen, meist in Form einer Holzschraube übergeht. Eine weitere Art ist der sogenannte Ringersbügel, ein U-förmig gebogener zylindrischer Metallstab, der meist als Tablarstütze (z.B. Büchergestelle) verwendet wird.

Die bekannten Verbindungselemente lassen sehr zu wünschen übrig. Die klassische Nut/Feder-Verbindung ist in der Regel zur Übertragung grösserer Kräfte nicht sonderlich geeignet. Zudem ist sie in den seltensten Fällen lösbar, ohne daß irgendein beteiligtes Bauteil beschädigt wird. Das Hefteisen ist unschön oder muß mit zusätzlichem Arbeitsaufwand eingelassen, versenkt und qeqebenenfalls abgedeckt werden. Der Rinqersbüqel kann nur in speziellen Fallen eingesetzt werden und ist nicht universell verwendbar.

Es ergibt sich daraus ein starkes Bedürfnis nach der Weiterentwicklung von Verbindungselementen für möglichst universellen Gebrauch in Innenraumqestaltunq, Schreinerei, Haushalt und Freizeit- und Liebhaberei-Bereich.

Aus der FR-A-2 191 638 geht eine Verbindungsvorrichtung für ebene, rechtwinklig zueinander stehende Begrenzungsflächen aufweisende Möbelstücke hervor. Die Verbindungseinrichtung besteht aus einer in eine Vertiefung des einen Möbelstückes stirnseitig eingelassenen ebenen Platte, die eine viereckige Öffnung in der Plattenebene und ein Gewindeloch in der bündig mit dem Möbelstück abschließenden Stirnseite aufweist. Diese Platte wird durch einen, eine ebene Phasenfläche auf dem Mantel aufweisenden zylindrischen, auf einer der Innenflächen der viereckigen Öffnung der Platte aufliegenden Stift gesichert. Die Verbindungseinrichtung weist ferner ein das andere Möbelstück in einem zylindrischen Loch durchdringendes Bolzenteil mit einer breiten Auflaqenfläche seines Bolzenkopfes auf, das in das Gewindeloch der Platte im ersten Möbelstück 12 eingeschraubt wird.

Ein Problem dieser Verbindungsvorrichtunq besteht darin, daß die Platte und das Bolzenteil keinen monolithischen Körper bilden. Die Platte gehört konstruktiv und funktionell zum einen Möbelstück, in dem sie in einer Ausnehmunq versenkt eingelassen und durch einen Querstift in ihrer Laqe festgehalten ist, während das Bolzenteil zum anderen Möbelstück gehört, dessen zylindrisches Loch es durchgreift. Die kraftflüssiqe Verbindung der beiden Möbelstücke erfolgt über das Gewinde zwischen Platte und Bolzenteil. Sie ist daher nicht völlig starr und dadurch ungewollten Deformationen und Verschiebungen ausgesetzt. Nachteilig ist auch, daß die bekannte Verbindungsvorrichtung aus insgesamt drei Elementen (Platte, Schraube, Querstift) besteht, die relativ umständlich handhabbar sind.

Die Aufgabe der Erfindung besteht darin, ein metallisches Bauelement zum Verbinden von Werkstücken anzugeben, welches eine einwandfreie kraftschlüssige Verbindunq mehrerer Werkstücke miteinander gewährleistet, wobei das Bauelement in seiner Verwendunq und Handhabunq einfach und handlich sein soll.

Diese Aufgabe wird durch ein Bauelement mit den Merkmalen des Patentanspruches 1 gelöst.

Ein wesentlicher Vorteil besteht auch darin, daß bei der Verwendung des vorliegenden Bauelementes nicht die Gefahr des Reissens oder Ausbrechens besteht.

Eine mit dem vorliegenden Bauelement herqestellte Verbindung ist vorteilhafterweise jederzeit ohne jegliche Beschädigung der Werkstücke lösbar. Zur Handhabung sind keine kostspieligen speziellen zusätzlichen Werkzeuge erforderlich. Das erfindungsgemäße Bauelement eignet sich zur kostengünstigen Massenfabrikation. Es ist insbsondere zum Verbindung von Werkstücken aus Holz, Holzwerkstoff oder Kunststoff universell verwendbar.

Im folgenden werden die Erfindung und deren Ausgestaltungen im Zusammenhang mit den Figuren näher erläutert.Es zeigen:
- Fig. 1: eine schematische auseinandergezogene perspektivische Darstellung des prinzipiellen Aufbaus des vorliegenden Bauelements und seiner Anordnung gegenüber den zu verbindenden Werkstücken.
- Fig. 2: eine perspektivische Darstellung der Grundausführung des vorliegenden Bauelements mit Lamellenteil und bolzenartigem Teil in Form einer Holzschraube.
- Fig. 3: eine perspektivische Darstellung einer Spezialausführung des vorliegenden Bauelements für eine platzsparende Verwendung in Ecken der Werkstücke.
- Fig. 4: eine perspektivische Darstellung einer Ausführung des vorliegenden Bauelements mit dem bolzenartigen Teil in Form einer Schraube mit einem zylindrischem Gewinde.
- Fig. 5: eine perspektivische Darstellung einer Ausführung des vorliegenden Bauelements mit dem bolzenartigen Teil in Form einer Schraube mit einem zylindrischen Metallgewinde.
- Fig. 6: eine perspektivische Darstellung einer Ausführung des vorliegenden Bauelements mit dem bolzenartigem Teil in Form einer Gewindehülse.
- Fig. 7: eine perspektivische Darstellung einer Ausführung des vorliegenden Bauelements mit dem bolzenartigem Teil in Form eines Stiftes.
- Fig. 8: eine perspektivische Darstellung eines Eindrehwerkzeugs.
- Fig. 9: eine perspektivische Darstellung einer Bohrlehre.

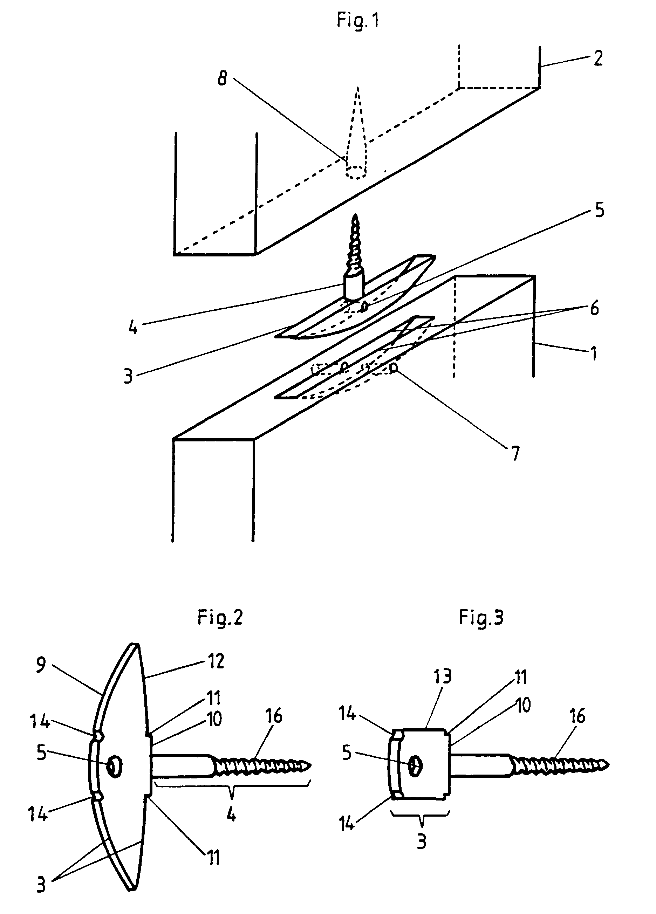

Fig. 1 zeigt eine schematische auseinandergezogene perspektivische Darstellung des prinzipiellen Aufbaus des vorliegenden Bauelements und seiner Anordnung gegenüber den zu verbindenden Werkstücken, 1 ist ein erstes Werkstück aus einem mindestens stirnseitig fein bearbeiteten vertikal stehenden Holzbrett oder einer entsprechenden Holzspanplatte, 2 stellt ein zweites Werkstück aus dem gleichen Material dar, ebenfalls vertikal stehend. Die Werkstücke 1 und 2 sind durch Stumpfstoß lösbar miteinander zu verbinden. Zu diesem Zweck ist das erste Werkstück 1 mit einer parallel zur Längskante verlaufenden, ungefähr in der Mitte angeordneten kreissegmentförmigen Nut 6 und einem diese Nut 6 durchsetzenden Querloch 7 versehen.

Das Werkstück 2 besitzt in seinem zentralen Teil, in der Ebene des Querlochs 7 liegend, 1 ein Längsloch 8 zur Aufnahme des Bauelements. Letzteres isL aus einem metallischen Werkstoff gefertigt und besteht grundsätzlich aus dem in die Nut 6 zu versenkenden Lamellenteil 3 und dem die feste Verbindung über das Längsloch 8 mit dem zweiten Werkstück 2 bewerkstelligenden bolzenartigen Teil 4. Dieser bolzenartige Teil 4 stellt somit über eine Verschraubung oder Verstiftung die kraftschlüssige Verbindung mit dem zweiten Werkstück 2 her. Letzteres kann selbstverständlich statt stumpf in einer Flucht mit dem ersten Werkstück 1 auch im rechten Winkel an einer Seitenfläche oder in einem beliebigen Winkel angeschlossen sein.

Fig. 2 bezieht sich auf eine perspektivische Darstellung der Grundausführung des Bauelements mit Lamellenteil 3 und bolzenartigem Teil 4 in Form einer Holzschraube. Das Bauelement ist gegenüber Fig. 1 um 90° bezüglich der Lamellenebene geschwenkt und um 90° in seiner Hauptachse gedreht wiedergegeben. Der Lamellenteil 3 besteht aus einem flachen laschenartigen Flügel von Kreissegment-Form 9 an seiner äusseren Kontur und ist, gegen die Flügelenden hin mit einer Verjüngung 12 versehen. An seiner inneren Kontur weist der Lamellenteil 3 einen ebenen Anschlag 10 auf, an der je eine Absetzung 11 anschliesst. In der Symmetrieebene des Bauelements, die durch die Achse des bolzenartigen Teils 4 gegeben ist, befindet sich die Aussparung 5, deren Achse auf der Lamellenebene senkrecht steht. Die äussere Kontur (Kreissegment form 9) des Lamellenteils 3 weist zwei Kerben 14 zur Aufnahme der Wulste 15 eines Eindrehwerkzeugs (siehe Fig. 8) auf. Diese Kerben 14 verhindern das seitliche Abrutschen des Eindrehwerkzeugs bei der Befestigung des Bauelements im zweiten Werkstück 2. Der bolzenartige Teil 4 ist hier als Holzschraube 16 mit konischem Gewinde ausgeführt.

In Figur 3 ist eine Spezialausführung des Bauelements für platzsparende Verwendung in Ecken der Werkstücke perspektivisch dargestellt. Im wesentlichen handelt es sich um die Grundausführung gemäss Fig. 2, jedoch mit abgeschnittenen Flügeln des Lamellenteils 3. Letzterer weist wieder den Anschlag 10, die Absetzungen 11, die Aussparung 5 und die Kerben 14 auf. Abgesehen von der kreisbogenförmigen äusseren Kontur stellt der Lamellenteil 3 im wesentlichen ein Rechteck 13 dar. Der bolzenartige Teil 4 ist im vorliegenden Fall wieder eine Holzschraube 16.

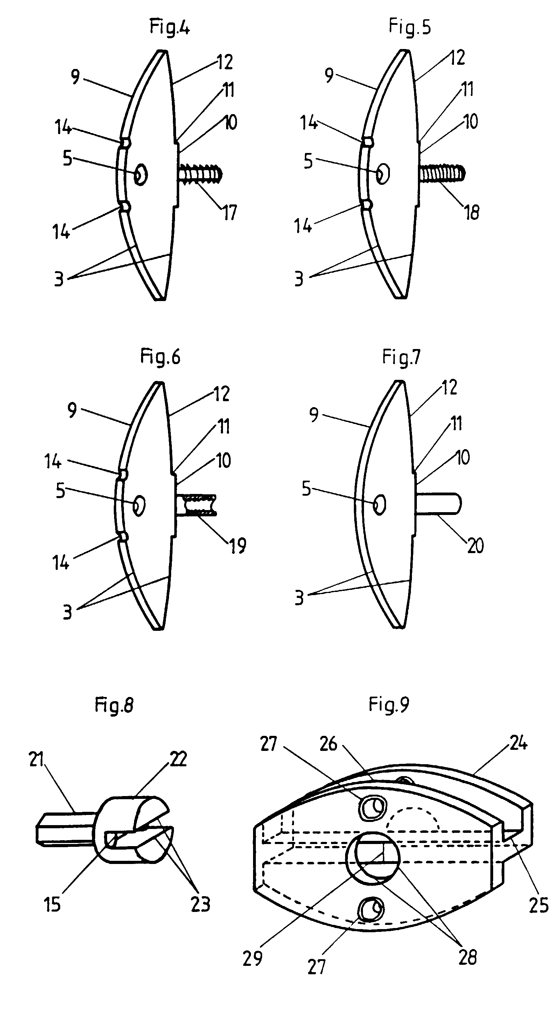

In Fig. 4 ist eine Ausführung des Bauelements mit dem bolzenartigen Teil in Form einer Schraube 17 mit zylindrischem Gewinde perspektivisch dargestellt. Der Lamellenteil 3 ist genau gleich, wie in Fig. 2 ausgeführt. Die Bezugszeichen 3, 5, 10. 11, 12 und 14 entsprechen genau denjenigen in Fig. 2. Der bolzenartige Teil 4 besteht hier aus der Schraube 17 mit einem kurzen zylindrischen Gewinde, das sich zum Eindrehen in ein entsprechendes vorgebohrtes Loch in Holz. Holzspanplatten, Kunststoff, Dübel etc. eignet.

Fig. 5 bezieht sich auf eine perspektivische Darstellung einer Ausführung des Bauelementes mit einem bolzenartigem Teil in Form einer Schraube 18 mit zylindrischem Metallgewinde. Der Lamellenteil 3 ist genau gleich wie in Fig. 2 ausgeführt. Die Bezugszeichen 3, 5, 9, 10, 11, 12 und 14 entsprechen genau denjenigen in Fig. 2. Der bolzenartige Teil 4 besteht hier aus der Schraube 18 mit einem vergleichsweise kurzen zylindrichen Metallgewinde, daß sich zum Eindrehen in ein entsprechendes Innengewinde in einer Metall- oder Kunststoffhülse oder in einem anderen mit Innengewinde versehenen Körper oder einem Dübel eignet.

Fig. 6 bezieht sich auf eine perspektivische Darstellung einer Ausführung des Bauelements mit einem bolzenartigen Teil in Form einer Gewindehülse 19. Der Lamellenteil 3 ist genau gleich, wie in Fig. 2 ausgeführt. Die Bezugszeichen 3, 5, 9, 10, 11, 12 und 14 entsprechen genau denjenigen in Fig. 2. Der bolzenartige Teil 4 besteht hier aus des Gewindehülse 19 (metallisches Innengewinde), die sich zum Aufschrauben auf ein entsprechendes metallisches Außengewinde auf einem im zweiten Werkstück 2 eingelassenen Gewindebolzen eignet.

In Fig. 7 ist eine Ausführung des Bauelements mit einem bolzenartigen Teil in Form eines Stiftes 20 perspektivisch dargestellt. Der Lamellenteil 3 ist genau gleich, wie in Fig. 2 ausgeführt. Die Bezugszeichen 3, 5, 9, 10, 11, 12 und 14 entsprechen genau denjenigen in Fig. 2. Der bolzenartige Teil 4 besteht hier aus dem Stift 20 oder einem glatten Rohr zur Einführung in ein entsprechendes glattes Loch im zweiten Werkstück 2 (Steckverbindung).

Fig. 8 zeigt eine perspektivische Darstellung eines Eindrehwerkzeugs. Dieses Eindrehwerkzeug dient zur Befestigung des Bauelements gemäß des Ausführung nach den Figuren 2, 3, 4, 5 und 6 im zweiten Werkstück 2 durch Einschrauben. Das Eindrehwerkzeug ist zum Einstecken bzw. Einklemmen in ein rotierendes maschinelles Handwerkzeug (z. B. Bohrmaschine) geeignet. Es besteht aus einem Schaft 21 zum Einspannen in das Handwerkzeug, im vorliegenden Fall als Sechskant ausgeführt, einem Kopf 22 mit einer Quernut 23 zur Aufnahme des Lamellenteils 3 des einzudrehenden Bauelements und zwei Wulsten 15 im Grund der Quernut 23, die in die Kerben 14 des Lamellenteils 3 eingreifen. Die Wulste 15 verhindern das seitliche Abrutschen des Eindrehwerkzeugs vom Bauteil während des Einschraubvorganges. Selbstverständlich kann der Schaft 21 auch einen anderen Querschnitt. z.B. ein beliebiges Vieleck oder einen Kreis haben.

Fig. 9 zeigt eine perspektivische Darstellung einer Bohrlehre. Diese Bohrlehre dient zur Führung des Bohrers bei der Herstellung des Querloches 7 im ersten Werkstück 1. zu diesem Zweck wird sie bündig in die vorher ausgefräste Nut 6 eingelegt. Die Bohrlehre besteht aus der plattenförmigen Kreissegment-Lehre 24 zur Aufnahme in der Nut 6, dem auf der Stirnfläche des ersten Werkstücks 1 aufzuliegenden Anschlagteil 25 und der Gegenplatte 26. Mindestens letztere weist die Bohrbüchse 27 auf. Im vorliegenden Fall hat auch die Kreissegment-Lehre 24 eine Bohrbüchse, um das Bohren des ersten Werkstücks 1 in einem Arbeitsgang zu ermöglichen. Zur besseren Kontrolle ist eine Aussparung 28 vorgesehen, durch die die Mittenmarkierung 29 (senkrechter Strich mit Pfeil) sichtbar ist.

### Ausführungsbeispiel 1:

Siehe Figuren 1 und 2.

Das Bauelement ist gemäß Fig. 2 ausgeführt und besteht aus niedriggekohltem weichen Stahl, der einen hohen Grad von Kaltverformung bei der Herstellung zuläßt. Der Lamellenteil 3 ist gestanzt, der bolzenartige Teil 4 aus Runddraht kaltverformt. Die Teile 3 und 4 sind stumpf zusammengeschweißt, das rohe Fertigteil entgratet, verputzt, mechanisch bearbeitet und dann gebeizt. Die Oberfläche des Bauelements ist zwecks Schutz gegen Korrosion und Oxidation verchromt.

Die Dimensionen betragen:
Lamellenteil 3: B = 57 mm: H = 12 mm:
   D = 4 mm
Bolzenartiger Teil 4: L = 40 mm: D = 5 mm

Die zu fügenden Werkstücke 1 und 2 bestehen aus Eichenholz mit einer Stirnseite von 22 mm x 150 mm. Bei der Verbindung handelt es sich gemäß Fig. 1 um einen stirnseitigen Stumpfstoß. Die Nut 6 im Werkstück 1 ist mit einer Kreissäge von 100 mm Durchmesser gefertigt, 13 mm tief eingeschnitten und 4 mm breit. Das Querloch 7 im Werkstück 1 ist von der Anschlagseite her in der Mitte der Stirnseite durchgehend gebohrt und weist einen Durchmesser vor 5 mm auf. Zur Sicherung befindet sich im Querloch 7 eine Schraube aus Stahl von 18 mm Länge und 5 mm Durchmesser. Im Werkstück 2 befindet sich senkrecht zur Stirnseite das Längsloch 8, das bei einer Länge von 40 mm einen Durchmesser von 3 mm hat (Vorbohren zur Aufnahme des bolzenartigen Teils 4).

Das Eindrehen des Bauelements in das Werkstück 2 erfolgt mit einem Eindrehwerkzeug (siehe Fig. 8) mit einer Quernut 23 von 4.5 mm Breite. Das Eindrehwerkzeug wird zu diesem Zweck in eine Bohrmaschine eingespannt. Das Querloch 7 im Werkstück 1 wird mit Hilfe der Bohrlehre (siehe Fig. 9) gebohrt. Der Radius der Kreissegment-Lehre 24 beträgt 50 mm. der Durchmesser der Bohrbüchse 27 innen 5.2 mm. Der Anschlagteil 25 hat eine lichte Weite von 9 mm.

Die total aufzuwendende Arbeitszeit für das Fügen der Werkstücke 1 und 2 beträgt ca. 6 min.

### Ausführungsbeispiel 2:

Siehe Fig. 2.

Das nach Beispiel 1 gefertigte Bauelement gleicher Abmessungen entspricht der Fig. 2. Im vorliegenden Fall handelt es sich im Gegensatz zu Fig. 1 um die Befestigung (lösbare Verbindung) eines Tablars an einer senkrechten Holzwand (Winkelstoß). Dabei entspricht das Tablar dem Werkstück 1, die Wand dem Werkstück 2. Die Bearbeitung der Werkstücke erfolgt analog Beispiel 1. Dabei wird zunächst das Längsloch 8 horizontal in die senkrechte Wand (Werkstück 2) vorgebohrt und das Bauelement mit seiner Holzschraube 16 (bolzenartiger Teil) in die Wand eingedreht. Im horizontal zu liegenden Tablar (Werkstück 1) wird längsseitig die Nut 6 eingefräst sowie das Querloch 7 gebohrt. Dann wird das Tablar auf den Lamellenteil 3 des Bauelements aufgesteckt und mit einer Schraube im Querloch 7 gesichert.

Als Variante zu diesem Beispiel soll hier die nicht lösbare fliegende Befestigung eines hölzernen Tablars in einer senkrechten Mauer erwähnt werden. Letztere ist ist mit einer Anzahl von Dübeln versehen, in die die Längslöcher 8 vorgebohrt sind. Als Bauelement wird ein solches mit aufgerauhten ("geprägter") Seitenflächen der Lamellenteile 3 benutzt. Vor dem Einschieben/Aufstecken des Tablars wird in die entsprechenden Nuten 6 Leim eingestrichen.

Ferner gehört hierher die lösbare Befestigung eines Tablars in einer Nische, wobei die Tablar-Stirnseiten durchgehende Nuten 6 zum Einschieben über die Lamellenteile 3 erhalten.

Als weitere Variante zu diesem Beispiel gilt die lösbare oder nicht lösbare Verbindung senkrecht stehender, im rechten Winkel aufeinander stoßender Wände beliebiger Ausführung (Winkelstoß).

### Ausführungsbeispiel 3:

Siehe Fig. 3.

Das Bauelement ist gemäss Fig. 3 ausgeführt und besteht aus niedriggekohltem welchen Stahl, der einen hohen Grad von Kaltverformbarkeit besitzt. Der Rohling ist aus Runddraht warm gestaucht, flachgepresst und anschließend kaltverformt. Das rohe Fertigteil ist entgratet, verputzt, mechanisch bearbeitet und zwecks Erhöhung der Korrosions- und Oxidationsfestigkeit verchromt.

Die Dimensionen betragen:
Lamellenteil 3 (Rechteck 13): B = 17 mm:
   H = 15 mm: D = 4 mm
Bolzenartiger Teil 4 (Holzschraube 16): L = 40 mm:
   D = 5 mm

Die zu fügenden Werkstücke 1 und 2 bestehen aus Nußbaumholz, wobei das Werkstück 2 eine Ecke in den aneinanderstoßenden senkrechten Wänden eines Möbelstücks und das Werkstück 1 ein wieder lösbares Tablar darstellt (zweifacher Winkelstoß). Das Vorgehen ist ähnlich den Beispielen 1 und 2. Die die Ecke bildenden Wände erhalten je ein Längsloch 8 zur Aufnahme des bolzenartigen Teils 4 (Holzschraube 16) des Bauelements. Das Eindrehen erfolgt mit Hilfe des Eindrehwerkzeugs. In die Stirn- wie in die Längsseite des Tablars wird je eine Nut 6 eingeschnitten sowie ein Querloch 7 gebohrt. Das Tablar wird auf die Lamellenteile 3 der Bauelemente aufgesteckt und mit Schrauben gesichert.

Das Bauelement gemäß Fig. 3 wird überall dort verwendet, wo für einen breiten, flügelartigen Lamellenteil 3 nach Fig. 2 kein Platz vorhanden ist und ferner wo für das Werkstück 1 keine Möglichkeit oder Notwendigkeit der Anbringung einer Nut 6 besteht: Ecken. Füße und Konsolen, Sockel etc. von Möbeln an Wand oder Boden.

### Ausführungsbeispiel 4:

Siehe Fig. 4.

Das Bauelement ist nach Fig. 4 ausgeführt und besteht aus niedriggekohltem welchem Stahl. Der Rohling ist aus Band gestanzt, warmverformt und kalt nachgepreßt (Schraube 17 mit zylindrischem Gewinde als bolzenartiger Teil). Das rohe Fertigteil ist mechanisch bearbeitet und verzinkt.

Die Dimensionen betragen:
Lamellenteil 3: B = 60 mm: H = 13 mm: D = 4 mm
Bolzenartiger Teil 4 (17): L = 12 mm; D = 4.5 mm

Im vorliegenden Fall entspricht das Werkzeug 1 dem Zwischboden und das Werkstück 2 der Seitenwand eines Schrankes. Ersteres besitzt eine Nut 6 zur Aufnahme des Lamellenteils 3 und letzteres eine Reihe von zylindrischen Bohrungen zur Aufnahme des bolzenartigen Teils 4 in Form einer Schraube 17 mit zylindrischem Gewinde. Im übrigen wird ähnlich Beispiel 1 vorgegangen. Die Verbindung wird über das Querloch 7 im Zwischenboden durch einen Bolzen gesichert und ist jederzeit lösbar.

Verbindungen zwischen Schrankboden und Schrankseite werden grundsätzlich gleich ausgeführt.

Als Variante zu diesem Beispiel wird hier die nicht lösbare Verbindung zwischen einer vertikalen Zwischenwand (Werkstück 1 mit je einer durchgehenden Nut 6 auf der oberen und der unteren Stirnseite) und einem Schrankboden bzw. Schrankdeckel (Werkstück 2 mit zylindrischen Längslöchern 8) erwähnt. Die Zwischenwand wird über die mit "Prägung" versehenen Lamellenteile 3 horizontal eingeschoben. Die Verleimung erfolgt analog zu Variante in Beispiel 2.

### Ausführungsbeispiel 5:

Siehe Fig. 5.

Das Bauelement ist nach Fig. 5 ausgeführt und weist grundsätzlich die gleichen Abmessungen wie in Beispiel 4 auf. Die Schraube 18 mit zylindrischem Metallgewinde ist mechanisch fein bearbeitet. Im übriger entsprechen Werkstoff unf Fertigung den unter Beispiel 4 angegebenen Daten.

Ähnlich Beispiel 4 handelt es sich hier um die lösbare Verbindung eines Schrankbodens mit einer Schrankseite, speziell als Eck-Verbindung. Die Schrankseite wird für das Einsetzen von Gewindedübeln mit zylindrischem Innen-gewinde vorgebohrt. Dann werden die Bauelemente mit ihrer Schraube 18 mit zylindrischem Metallgewinde (bolzenartiger Teil 4) in die Dübel der Schrankseite (Werkstück 2) eingedreht. Der Schrankboden (Werkstück 1) wird an seinen Stirnflächen mit Nuten 6 zur Aufnahme des Lamellenteils 3 und mit Querlöchern 7 für Schrauben/Bolzen-Sicherung versehen. Dann wird der Schrankboden in üblicher Weise auf die Lamellenteile 3 der Bauelemente aufgesteckt und seitlich über die Querlöcher 7 gesichert.

Im Falle von mehrteiligen Schränken in Reihenbauweise wird ähnlich vorgegangen. Statt an den Schrankseiten Dübel einzusetzen, werden durchgehende Löcher gebohrt und Gewindehülsen mit Innengewinde eingepreßt. Diese nehmen von jeder Seite je ein Bauelement mit seiner Schraube 18 als bolzenartigen Teil 4 in gleicher Flucht (koaxial) auf.

### Ausführungsbeispiel 6:

Siehe Fig. 6.

Das gemäß Fig 6 ausgeführte Bauelement besteht aus weichem Stahl und ist ähnlich Beispiel 1 gefertigt. Der Lamellenteil 3 ist gestanzt, der bolzenartige Teil 4, als Gewindehülse 19 ausgebildet, aus einem Abschnitt eines Rohres mit Innengewinde gefertigt und auf den Lamellenteil 3 stirnseitig stumpf aufgeschweißt. Das rohe Fertigteil ist entgratet, verputzt, mechanisch bearbeitet, gebeizt und verchromt. Die Abmessungen entsprechen ungefähr denjenigen in Beispiel 4. Die Gewindehülse 19 hat hier einen Außendurchmesser von ca. 5,5 mm. das Innengewinde entspricht M 4.

Wie in Beispiel 5 handelt es sich hier um die lösbare Befestigung eines Schrankbodens an einer Schrankseite. Die Schrankseite (Werkstück 2) wird mit durchgehenden Löchern des Außendurchmessers der Gewindehülse 19 versehen und letztere in das jeweilige Loch eingesetzt und von der Gegenseite her mit einem Schraubenbolzen gesichert . Der Schrankboden (Werstück 1) wird gemäß Beispeil 5 mit Nuten 6 und mit Querlöchern 7 versehen und auf die Lamellenteile 3 aufgesteckt und gesichert.

Im Falle von mehrteiligen Schränken wird ahnlich vorgegangen. In die durchgehenden Löcher in der Schrankseite werden Gewindebolzen eingesetzt, die beidseitig die Gewindehülsen 19 der gegenüberliegenden Bauelemente aufnehmen, auf deren Lamellenteile 3 die in gleicher Ebene liegenden Schrankböden aufgesteckt werden.

### Ausführungsbeispiel 7:

Siehe Figuren 5 und 6.

Es handelt sich hier um die kombinierte Verwendung von je einem Paar bildenden Bauelementen mit Schraube 18 mit zylindrischem Metallgewinde (Fig. 5) und mit Gewindehülse 19 (Fig. 6) von gleichem Gewindedurchmesser. Material, Ausführung, Abmessungen und Fertigung der Bauelemente entsprechen den Beispielen 5 und 6.

Bei der lösbaren Verbindung wird ähnlich Variante des Beispiels 6 bei der Befestigung mehrerer Böden in einer Schrankseite vorgegangen. In der Schrankseite (werkstück 2) werden Löcher von der Größe des Außendurchmessers der zylindrischen Gewindehülse 19 gebohrt, diese eingesteckt und mit dem bolzenartigen, als Schraube 18 ausgebildeten Teil des gegenüberliegenden Bauelements eingedreht und gesichert. Alles übrige Vorgehen entspricht demjenigen der Beispiele 5 und 6.

### Ausführungsbeispiel 8:

Siehe Fig. 7.

Das gemäß Fig. 7 ausgeführte Bauelement besteht aus welchem verchromtem Stahl und ist ähnlich Beispiel 1 gefertigt. Der Lamellenteil 3 ist gestanzt, der Bolzenartige Teil 4, hier als Stift 20 ausgeführt, aus einem Abschnitt einer zylindrischen Stange gefertigt und auf den Lamellenteil 3 stirnseitig stumpf aufgeschweißt. Entgraten, Verputzen, mechanisches Bearbeiten, Beizen und Verchromen entspricht dem vorgehen in den vorangegangenen Beispielen. Die Abmessungen des Bauelements entsprechen ungefähr denjenigen des Beispiels 4. Der Stift 20 hat hier einen Durchmesser von ca. 5 mm.

Im vorliegenden Fall handelt es sich hier um das Anordnen eines Tablars in einer Schranknische und das Sichern gegen Herausfallen. In der Schrank-Seltenwand befinden sich vertikale Reihen von Löchern in gleicher Höhenlage. Der Stift 20 des bolzenartigen Teils des jeweiligen Bau-elements wird derart in das vorgesehene Loch eingesteckt, daß der Lamellenteil 3 mit seiner Fläche horizontal zu liegen kommt. Das Tablar wird einfach auf die Lamellenteile 3 aufgelegt und gegebenenfalls mittels Schrauben oder Bolzen über die Bohrungen 5 und die Querlöcher 7 gegen Herausfallen gesichert.

Als Varianten zu diesem Beispiel gelten hier Anordnungen von Tablaren (Werkstück 1) mit kreissegmentartigen Ausfräsungen auf der Tablarunterseite (parallel zur Horizontalebene des Tablars) oder mit kreissegmentartiegn Nuten 6. Dadurch werden die Tablare noch besser und stabiler in einer Lage festgehalten und tragen auch zur Steifigkeit des gesamten Möbelstücks bei.

Die Handhabung des Eindrehwerkzeugs gemäß Fig. 8 zur Montage des Bauelements in Werkstück 2 sowie der Bohrlehre gemäß Fig. 9 zur Herstellung des Querloches 7 in Werkstück 1 liegt im Rahmen eines jeden Fachmannes und bedarf keiner zusätzlichen Erläuterung.

Die Erfindung ist nicht auf die Ausführungsbeispiele beschränkt.

Das metallische Bauelement zum Verbinden von Werkstücken 1: 2 aus Holz, Holzwerkstoff, wie Spanplatte, Schichtstoffplatte oder Kunststoff, basierent auf dem Nut/Feder-Prinzip besteht aus einem die kraftschlüssige Verbindung mit dem ersten, mit einer Nut 6 oder einem Schlitz und einem Querloch 7 versehenen Werkstück 1 bewerkstelligenden ebenen Lamellenteil 3 und einem durch Verschrauben oder Verstiften die kraftschlüssige Verbindung mit dem zweiten, mit einem Längsloch 8 versehenen Werkstück 2 bewerkstelligenden bolzenartigen, auf dem Lamellenteil 3 stirnseitig rechtwinklig aufsitzenden Teil 4, der mit dem besagten zweiten Werkstück 2 fest verbunden ist, wobei der Lamellenteil 3 in seiner Mitte, in der Achse des bolzenartigen Teils 4 eine auf der Lamellenebene senkrecht stehende Bohrung 5 zur Fixierung des ersten Werkstücks 1 mittels einer Schraube oder eines Stiftes aufweist. Der Lamellenteil 3 weist auf seiner äußeren Stirnseite vorzugsweise Kreissegmentform 9 auf und besitzt an seiner bolzenseitigen Stirnfläche einer vorkragenden ebenen Anschlag 10 mit einer zurückstehenden Absetzung 11 sowie nach beiden spitz zulaufenden Enden hin in Richtung Lamellenebene eine zurückstehende Verjüngung 12, um das Einschrauben oder Einstecken in das zweite Werkstück handlicher zu gestalten. In einer speziellen Ausführung weist der Lamellenteil 3 auf seiner äußeren Stirnseite Kreissegmentform 9 auf und besitzt im übrigen Rechteckform 13, dergestalt, daß die Querabmessung die Dimension des Anschlags 10 um höchstens 20 % überschreitet.

Das Bauelement weist im Lamellenteil 3 auf seiner äußeren Stirnseite mit Vorteil Kerben 14 zur Aufnahme eines maschinellen Eindrehwerkzeugs auf, das mit entsprechenden Wulsten 15 versehen ist, um das seitliche Abrutschen beim Eindrehvorgang zu verhindern.

Der bolzenartige Teil 4 besteht aus einer Holzschraube 16 mit konischem Gewinde zum Einschrauben in Holz, Spanplatten oder welchen Kunststoff oder Dübel oder aus einer Schraube 17 mit zylindrischem Gewinde zum Einschrauben in zylindrische Bohrungen in Holz, Spanplatten oder Kunststoff oder einer Schraube 16 mit zylindrischem Metallgewinde zum Einschrauben in Gewindehülsen, Gewindedübel oder Muttern oder aus einer mit Innengewinde versehenen Gewindehülse 19 zum Aufschrauben auf Schrauben, Gewindebolzen oder Gewindestangen oder aus einem Stift 20 oder einem glatten Rohr.

Der Lamellenteil 3 weist in seiner besonderen Ausführung Seitenflächen auf, die zwecks Verbesserung der Haftung beim Verleimen mit dem Werkstück 1 aufgerauht sind, Vertiefungen oder Erhöhungen oder ein Prägemuster aufweisen oder sonstwie zur Oberflächenvergrößerung hergerichtet sind.

Das Eindrehwerkzeug für das Bauelement besteht aus einem zylindrischen oder vielkantigen Schaft 21 und einem Kopf 22 mit Quernut 23 mit kreisförmigem Grund und seitlichen Wulsten 15.

Die Bohrlehre dür das Bauelement besteht aus einem Körper mit U-förmigem Querschnitt mit einer plattenförmiger Kreissegment-Lehre 24 entsprechend der Nutenform des ersten Werkstücks 1, einem Anschlagteil 26 zur Tiefeneinstellung und einer Gegenplatte 26 zur Aufnahme der Bohrbüchse 27 sowie einer Aussparung 28 zur Kontrolle und einer Mittenmarkierung 29.

### Vorteile der Erfindung

- Die Verbindung zwischen den Werkstücken ist durch Demontage des metallischen Bauelements jederzeit lösbar.
- Wird eine unlösbare feste Verbindung der Werkstücke gewünscht, so ist dies ohne Änderung der konstruktion und der Verfahrensweise durch Verleimen, des Lamellenteils mit dem genuteten Werkstück möglich.
- Eignung zur Massenfabrikation des Bauelements.
- Universelle Verwendbarkeit des Bauelements für sämtliche Arten des Zusammenfügens und Zusammenstellens einer beliebigen Anzahl von Werkstücken.
- Es sind keine besonderen zusätzlichen Werkzeuge erforderlich. Zur Vorbereitung der zu verbindenden Werkstücke genügen Nutenfräse und Bohrmaschine.
- Der Zeitaufwand zum Verbinden der Werkstücke ist klein. Die methode ist daher geeignet zur Massenfertigung in der Schreinerei.
- Es sind mechanisch sehr feste, hochbeanspruchbare Verbindungen mit minimaler Gefahr der Rißbildung oder des Ausbrechens des Materials der Werkstücke in Verbindungsnähe herstellbar.

## Patentansprüche

1. Metallisches Bauelement zum Verbinden von einem ersten Werkstück (1) mit einem zweiten Werkstück (2), basierend auf dem Nut/Feder-Prinzip, wobei es einen ebenen Lamellenteil (3), der in eine Nut (6) des ersten Werkstückes (1) einsetzbar ist, und einen stirnseitig vorqesehenen bolzenartigen Teil (4) besitzt, der durch Einsetzen in ein Längsloch (8) des zweiten Werkstückes (2) mit diesem fest verbindbar ist, wobei der Lamellenteil (3) in der Achse des bolzenartigen Teiles (4) eine auf der Lamellenebene senkrecht stehende Aussparung (5) aufweist, die zur Fixierung an dem ersten Werkstück (1) mittels einer Schraube oder eines Stifts dient, dadurch gekennzeichnet, daß der bolzenartige Teil (4) an den Lamellenteil (3) angeformt ist und daß der Lamellenteil (3) auf seiner äußeren Stirnseite eine Kreisseqmentform (9) aufweist, an seiner bolzenseitigen Stirnfläche einen vorkragenden ebenen Anschlag (10) mit einer zurückstehenden Absetzung (11) besitzt und nach beiden spitz zulaufenden Enden hin in Richtunq Lamellenebene mit einer zurückstehenden Verjüngung (12) ausgeführt ist.

2. Bauelement nach Anspruch 1, dadurch gekennzeichnet, daß der Lamellenteil (3) im übrigen eine Rechteckform (13) besitzt, dergestalt, daß die Querabmesunq die Dimension des Anschlaqs (10) um höchstens 20 % überschreitet.

3. Bauelement nach Anspruch 1 oder 2, dadurch gekennzeichnet, daß der Lamellenteil (3) auf seiner äußeren Stirnseite Kerben (14) zur Aufnahme eines maschinellen Eindrehwerkzeugs aufweist, das mit entsprechenden Wulsten (15) versehen ist, um das seitliche Abrutschen beim Eindrehvorqanq zu verhindern.

4. Bauelement nach einem der Ansprüche 1 bis 3, dadurch gekennzeichnet, daß der bolzenartige Teil (4) die Form einer Holzschraube (16) mit konischem Gewinde zum Einschrauben in Holz, Spanplatten oder weichen Kunststoff oder Dübel aufweist.

5. Bauelement nach einem der Ansprüche 1 bis 3, dadurch gekennzeichnet, daß der bolzenartige Teil (4) die Form einer Schraube (17) mit zylindrischem Gewinde zum Einschrauben in zylindrische Bohrungen in Holz, Spanplatten oder Kunststoff aufweist.

6. Bauelement nach einem der Ansprüche 1 bis 3, dadurch gekennzeichnet, daß der bolzenartige Teil (4) die Form einer Schraube (18) mit zylindrischem Metallgewinde zum Einschrauben in Gewindehülsen, Gewindedübel oder Muttern aufweist.

7. Bauelement nach einem der Ansprüche 1 bis 3, dadurch gekennzeichnet, daß der bolzenartige Teil (4) die Form einer mit einem Innenqewindet versehenen Gewindehülse (19) zum Aufschrauben auf Schrauben, Gewindebolzen oder Gewindestangen aufweist.

8. Baulement nach einem der Ansprüche 1 bis 3, dadurch gekennzeichnet, daß der bolzenartige Teil (4) die Form eines Stiftes (20) oder eines glatten Rohres aufweist.

9. Bauelement nach einem der Ansprüche 1 bis 8, dadurch gekennzeichnet, daß der Lamellenteil (3) Seitenflächen aufweist, die zwecks Verbesserung der Haftung beim Verleimen mit dem ersten Werkstück (1) aufgerauht sind, Vertiefungen oder Erhöhungen oder ein Prägemuster aufweisen oder sonstwie zur Oberflächenvergrößerung ausgestaltet sind.

10. Eindrehwerkzeug für ein Bauelement nach einem der Ansprüche 1 bis 9, dadurch gekennzeichnet, daß es aus einem zylindrischen oder vielkantigen Schaft (21) und einem Kopf (22) mit einer Quernut (23) mit einem kreisförmigen Grund und mit seitlichen Wulsten (15) besteht.

11. Bohrlehre für ein Bauelement nach einem der Ansprüche 1 bis 9, dadurch gekennzeichnet, daß sie aus einem Körper mit U-förmigem Querschnitt mit plattenförmiger Kreissegment-Lehre (24) entsprechender Nutenform des ersten Werkstücks (1), einem Anschlagteil (25) zur Tiefeneinstellunq und einer Gegenplatte (26) zur Aufnahme einer Bohrbüchse (27) besteht.

## Claims

1. A metal component for joining a first workpiece (1) with a second workpiece (2), based on the tongue and groove principle, with it possessing a flat lamellar part (3), which can be inserted into a groove (6) of the first workpiece (1), and a pin-type part (4) provided on one end face, which by insertion into a slot (8) in the second workpiece (2) can be securely connected thereto, with the lamellar part (3) in the axis of the pin-type part (4) having a recess (5) perpendicular to the lamellar plane, which serves for attachment to the first workpiece (1) by means of a screw or a peg,
**characterised in that** the pin-type part (4) is moulded onto the lamellar part (3),
and in that on its outer end face the lamellar part (3) has the shape of a segment of a circle (9), at its end face on the side of the pin has a projecting plane stop (10) with a set-back shoulder (11) and towards both tapering ends in the direction of the lamellar plane is designed with a set-back taper (12).

2. A component according to Claim 1,
**characterised in that** the lamellar part (3) furthermore has a rectangular shape (13) so that the cross-sectional dimension exceeds the dimension of the stop (10) by 20 % at most.

3. A component according to Claim 1 or 2,
**characterised in that** on its outer end face the lamellar part (3) has slots (14) for receiving a mechanical screwing-in tool, which is provided with corresponding swellings (15) to prevent lateral sliding during the screwing-in operation.

4. A component according to one of Claims 1 to 3,
**characterised in that** the pin-type part (4) takes the form of a wood screw (16) with a conical thread for screwing into wood, chipboard or soft plastics or dowels.

5. A component according to one of Claims 1 to 3,
**characterised in that** the pin-type part (4) takes the form of a screw (17) with a cylindrical thread for screwing into cylindrical bores in wood, chipboard or plastics.

6. A component according to one of Claims 1 to 3,
**characterised in that** the pin-type part (4) has the form of a screw (17) with a cylindrical metal thread for screwing into threaded bushes, threaded dowels or nuts.

7. A component according to one of Claims 1 to 3,
**characterised in that** the pin-type part (4) takes the form of a threaded sleeve (19) provided with an internal thread for screwing onto screws, threaded bolts or threaded pins.

8. A component according to one of Claims 1 to 3,
**characterised in that** the pin-type part (4) has the form of a peg (20) or of a smooth tube.

9. A component according to one of Claims 1 to 8,
**characterised in that** the lamellar part (3) comprises lateral faces which are roughened for the purpose of improving adhesion when gluing with the first workpiece (1), comprise dents or raised sections or an embossed pattern, or are constructed in any other way to enlarge the surface.

10. A screwing-in tool for a component according to one of Claims 1 to 9,
**characterised in that** it consists of a cylindrical or polyhedral shank (21) and a head (22) with a transverse slot (23) having a circular base and having lateral swellings (15).

11. A hole gauge for a component according to one of Claims 1 to 9,
**characterised in that** it consists of a body with a U-shaped cross section with a plate-shaped circular segment gauge, a stop part (25) for depth adjustment and a counter-plate (26) for receiving a drill bush (27).

## Revendications

1. Elément d'assemblage métallique pour l'assemblage d'une première pièce (1) avec une deuxième pièce (2), sur le principe d'assemblage par rainure/languette, comprenant une partie-lamelle (3) plane susceptible d'être montée dans une rainure (6) de la première pièce (2), et une partie-tige (4) prévue frontalement, qui peut, par engagement dans un trou longitudinal (8) de la deuxième pièce (2), être reliée rigidement à cette dernière, la partie-lamelle (3) présentant dans l'axe de la partie-tige (4) un évidement (5) orienté perpendiculairement au plan de la lamelle, et servant à la fixation à la première pièce (1) à l'aide d'une vis ou d'une goupille, **caractérisé** par le fait que la partie-tige (4) est solidaire de la partie-lamelle (3) et que la partie-lamelle (3) présente sur sa tranche frontal une forme de segment de cercle (9), sur sa face frontale côté tige une butée (10) plane, saillante, avec un décrochement (11) formant épaulement, et une dépouille (12) vers les deux extrémités des ailes s'effilant en pointe, en direction du plan de la lamelle.

2. Elément d'assemblage suivant la revendication 1, **caractérisé** par le fait que la partie-lamelle (3) présente par ailleurs une forme rectangulaire (13), de telle manière que la dimension transversale dépasse au plus de 20 % la dimension de la butée (10).

3. Elément d'assemblage suivant la revendication 1 ou 2, **caractérisé** par le fait que la partie-lamelle (3) présente, sur sa tranche frontale extérieure, des encoches (14) pour recevoir un outil de vissage à moteur muni de bourrelets (15) correspondants pour empêcher le glissement latéral pendant l'opération de vissage.

4. Elément d'assemblage suivant l'une des revendications 1 à 3, **caractérisé** par le fait que la partie-tige (4) présente la forme d'une vis à bois (16) à filetage conique pour le vissage dans du bois, des panneaux de particules, de la matière plastique souple ou des chevilles.

5. Elément d'assemblage suivant l'une des revendications 1 à 3, **caractérisé** par le fait que la partie-tige (4) présente la forme d'une vis (17) à filetage cylindrique pour le vissage dans des trous cylindriques dans du bois, des panneaux de particules ou de la matière plastique.

6. Elément d'assemblage suivant l'une des revendications 1 à 3, **caractérisé** par le fait que la partie-tige (4) présente la forme d'une vis à métaux (18) à filetage cylindrique pour le vissage dans des douilles à filetage intérieur, des chevilles à filetage intérieur ou des écrous.

7. Elément d'assemblage suivant l'une des revendications 1 à 3, **caractérisé** par le fait que la partie-tige (4) présente la forme d'une douille (19) à filetage intérieur, pour vissage sur des vis ou tiges filetées.

8. Elément d'assemblage suivant l'une des revendications 1 à 3, **caractérisé** par le fait que la partie-tige (4) présente la forme d'une fiche (20) ou d'un tube lisse.

9. Elément d'assemblage suivant l'une des revendications 1 à 8, **caractérisé** par le fait que la partie-lamelle (3) présente des surfaces latérales qui, pour améliorer l'adhérence lors du collage avec la première pièce (1) sont rendues rugueuses, présentent des creux ou saillies ou un gaufrage, ou sont conformées d'une autre manière en vue de l'augmentation de leur surface (utile).

10. Outil de vissage pour un élément d'assemblage suivant l'une des revendications 1 à 9, **caractérisé** par le fait qu'il comprend une tige (21) cylindrique ou polygonale et une tête (22) avec une rainure transversale (23) à fond demi-circulaire et à bourrelets latéraux (15).

11. Gabarit de perçage pour un élément d'assemblage suivant l'une des revendications 1 à 9, **caractérisé** par le fait qu'il est constitué par un corps de profil en U avec une partie-plaque (24) en segment de cercle, correspondant à la forme de la rainure de la première pièce (1), une partie-butée (25) pour le réglage de profondeur et une contre-plaque (26) recevant un manchon guide-foret (27).
